# EUROPEAN PATENT SPECIFICATION

(11) **EP 4 107 442 B1**
(45) Date of publication and mention of the grant of the patent: **25.12.2024**
(21) Application number: 21708324.5
(22) Date of filing: 18.02.2021
(51) Int. Cl.: F24H 3/04, F04D 25/08, F04D 29/30, F04D 29/58, F04D 29/64, B29C 65/00, B29C 65/10, F24H 9/00, H05B 3/42

(54) **ELECTRIC ROOFING TORCH**
ELEKTRISCHER BRENNER FÜR DACHBEKLEIDUNGEN
CHALUMEAU ÉLECTRIQUE POUR TOITURE

(30) Priority: 18.02.2020 GB 202002224
(43) Date of publication of application: 28.12.2022
(73) Proprietor: Imperial Thermal Engineering Ltd, Bradwell Braintree, Essex CM77 8DZ (GB)
(72) Inventor: FORBES-BROWN, Jonathan, Essex CM77 8DZ (GB)
(74) Representative: Dehns
(86) International application number: PCT/GB2021/050401
(87) International publication number: WO 2021/165684

(56) References cited:
- GB-A- 2 317 926
- JP-A- S61 217 648
- US-A- 4 089 618
- US-A1- 2007 065 124
- US-A1- 2017 051 747
- IMPERIAL THERMAL ENGINEERING LTD: "We're back from Futurebuild!", 11 March 2019 (2019-03-11), XP055795768, Retrieved from the Internet <URL:https://www.imperialthermal.co.uk/post/we-re-back-from-futurebuild> [retrieved on 20210415]

## Description

### Field

The present specification concerns electric roofing torches.

### Background

Roofing products, such as bitumen, are used in the sealing of roof structures. During the application of roofing membranes, bitumen-based products are melted using gas-powered roofing torches, and these are used in order to seal the membranes to the roof structure. Prior to applying the membrane, the torch may be used to prepare the area by drying the surface where the membrane is to be laid and/or to ready the membrane.

These gas-powered roofing torches come in many forms, but are generally in the form of a hand-held device comprising a lance with a nozzle at the end. The lance is coupled to a gas source, for example, a cylinder of propane or butane. The gas is burnt at the nozzle to produce a hot naked flame and generate heat, which is then used to melt the bitumen-based roofing product and/or prepare the surface beforehand. The bitumen-based materials might be incorporated into a roofing membrane or they might be heated and applied separately during sealing of a membrane.

However, the use of naked flames during the construction or repair of a building poses a tremendous fire risk and there is plenty of evidence of instances where a fire has started through the use of a naked flame from such a roofing torch. It is not only the presence of flammable gases but in such construction environments there will usually be exposed, combustible parts of the roof structure as well as combustible debris collected in the working area. In addition to safety, there are also moves to burn fewer fossil-based resources.

As a result, it would be desirable to provide an improved roofing torch, particularly one which avoids the use of a naked flame and reduces carbon consumption.

There have been a number of developments recently with electric powered roofing torches. In one known example, a backpack is provided comprising an electric fan to generate a flow of air which is directed via a flexible tube into a handheld torch provided with an electric heater matrix to heat the air. The resulting flow of hot air is then directed via a lance or nozzle to where it is needed in order to apply heat to a roofing product, e.g., a roofing membrane being used on a roof structure. This electric roofing torch solution, while offering many benefits through avoiding naked flames and reduced carbon consumption, is however quite bulky and heavy for the operator to manoeuvre, and improvements in performance are also desirable.

US 2007/065124 A1 discloses a heat-expelling device with a wind guide comprising a shell, a heat-generating body disposed within the front portion of the shell and a wind-blowing unit disposed within the rear portion of the shell.

JP S61 217648 A discloses an air heating device having a fan, an air temperature control device and a heater arranged in sequence.

GB 2317926 A discloses an axial fan unit comprising fan blades extending from a hub provided with a deflector ring at the air delivery end of the rotational axis.

### Summary

According to one aspect, there is provided an electric roofing torch as claimed in claim 1.

Thus the fan unit is mounted in the tubular body to drive a flow of air through the tubular body at velocity, pressure and volume that is sufficient for roofing operations.

The collection of features provided by at least the preferred embodiments work together to result in an electric roofing torch that is:
(i) lightweight to use,
(ii) easy to manoeuvre during roofing operations,
(iii) is free of naked flames,
(iv) does not use flammable products, and/or
(v) is able to produce the heat, volume and flow of air required for the roofing operations, such as laying roofing membranes, with zero carbon emissions.

For example, the heater tube may be capable of heating the flow of air to temperatures in excess of 500°C, more preferably in excess of 600°C. The heater tube may comprise a complex matrix 'super heater' that is mounted in the tubular body to heat the flow of air as it passes through the tubular body.

The fan unit may be able to generate volumes of air flow from a nozzle of the electric roofing torch that are in excess of 800 m³/h, more preferably in excess of 900 m³/h. This may be with speeds of air flow in excess of 80km/h or even more than 90km/h. In a preferred embodiment, air flow speeds of greater than 100km/h, for example, 105km/h or greater, are achievable from the electric roofing torch at such volumes.

The fan unit may be a high frequency, three-phase AC, electric vaneaxial fan.

Through a selective choice of materials and construction, it is possible to provide a light-weight solution for an operator. Thus in preferred embodiments it may be possible to keep the overall weight of the electric roofing torch down to just a few kilograms (e.g., less than 7kg and preferably less than 5kg) through an appropriate choice of components. For example, the fan unit may have a weight of less than 2.5kg. The tubular body may weigh less than 2kg, preferably less than 1.5kg, and more preferably still less than 1.0kg. Any part where weight can be minimised will help to reduce the weight that the operator has to carry for potentially extended periods, as well as helping to improve the torch's general usability.

The impeller may be provided with a plurality of blades. The blades may each comprise a leading edge and a trailing edge, and wherein the trailing edges of the blades may have been machined back to provide a cylindrical cut-away profile. For example, the trailing edge of each blade comprises a radially outer, rectangular cut-away portion and a radially inner, extended rib portion that blends to a domed outer surface of a hub of the impeller. Such a configuration, helps to facilitate the generation of a powerful flow of air when the impeller is rotated at high rotational speeds.

Within the fan unit, downstream of the impeller there may be a plurality of vanes. There may be between 5 and 15 vanes, for example, extending between a radially inner surface (radially outer surface of the fan core) and a radially outer surface (radially inner surface of the fan housing) of a core flow path. These may help to pressurise the flow of air.

As a result of the double-walled structure, the operator can be shielded from the heat of the heater tube located within the inner tube. A downstream end of the fan unit may also support an upstream end of the inner tube within the outer tube, facilitating construction.

According to another aspect, there is provided a method of providing a working flow of hot air from an electric roofing torch for use in a roofing operation as claimed in claim 15.

The method of providing a working flow of hot air may comprise using an electric roofing torch as described herein in relation to the first aspect.

### Figures

Certain preferred embodiments will now be described in greater detail, by way of example only, and with reference to the accompanying drawings, in which:
Fig. 1 shows a perspective view of an exemplary electric roofing torch (with the carriage removed);
Fig. 2 shows an end on view looking into the outlet nozzle of the electric roofing torch of Fig. 1;
Fig. 3 shows a cross-sectional view through the electric roofing torch of Fig. 1 taken along the central axis A-A;
Fig. 4 shows a perspective view of an exemplary fan housing for the fan unit;
Fig. 5 shows a cross-sectional view of the fan housing of Fig. 4;
Fig. 6 shows a cross-sectional view of an exemplary fan unit;
Fig. 7 shows a cross-sectional view of an exemplary fan core for the fan unit of Fig. 6;
Fig. 8 shows a cross-sectional view of an exemplary fan core comprising a fan stator and an impeller;
Fig. 9A shows a perspective view of an upstream side of an exemplary impeller and
Fig. 9B shows a perspective view of a downstream side of the exemplary impeller;
Fig. 10 shows a perspective view of an exemplary electric roofing torch;
Fig. 11 shows an end on perspective view of the electric roofing torch of Fig. 10 looking towards the outlet nozzle;
Fig. 12 shows an exemplary power unit for use with the electric roofing torch of Fig. 10;
Fig. 13 shows a perspective view of an exemplary delivery nozzle;
Fig. 14 shows an end on view of the delivery nozzle of Fig. 13 looking towards the outlet; and
Fig. 15 shows an exploded perspective view of the electric roofing torch of Fig. 3.

### Detailed Description

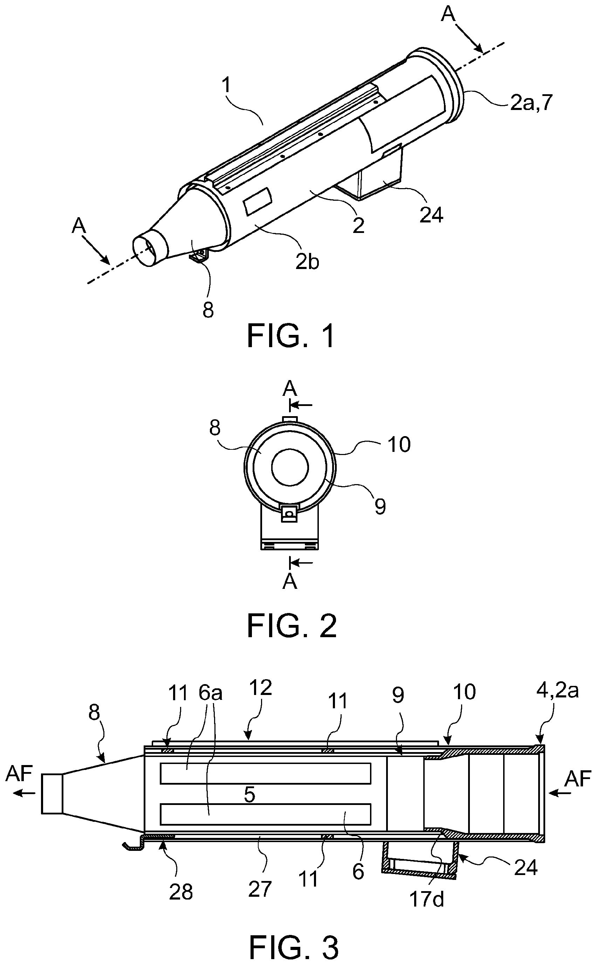

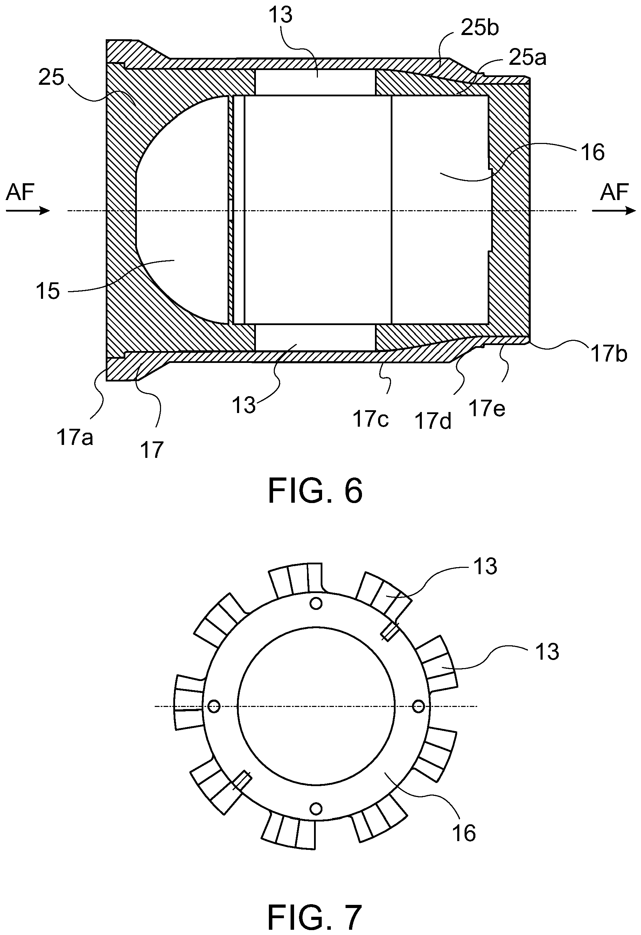

As shown in Fig. 1, an electric roofing torch 1 is provided comprising a tubular body 2 having an upstream end 2a and a downstream end 2b. Fig. 2 is an end-on view looking up towards the downstream end 2b of the tubular body 2, and Fig. 3 is a side cross-sectional view taken along the central axis A-A. As seen from Fig. 3, a fan unit 4 is mounted in the upstream end 2a of the tubular body 2 to drive a flow of air through the tubular body 2. A heater tube 5 is provided within the tubular body 2 comprising a heater matrix 6. The heater tube 5 is mounted in the tubular body 2 to heat the flow of air as it passes through the tubular body 2. In accordance with the present invention, the fan unit 4, which is now mounted within the tubular body 2, is an electric vaneaxial fan (see Fig. 6) which is mounted upstream of the heater tube 5.

As shown in Fig. 1, an inlet 7 of the tubular body 2 may be provided at a first, upstream end 2a thereof and an outlet 8 provided at a second, downstream end 2b thereof opposite the first end. The tubular body 2 is arranged to guide air from the fan unit 4 through the heater tube 5 towards the outlet 8. The outlet 8 is preferably in the form of a nozzle outlet, in particular a conical nozzle 8.

The tubular body 2 may have a circular cross-section. The tubular body 2 may take the form of a cylindrical housing and is preferably straight in order to aid fabrication.

The tubular body 2 comprises a double-walled structure as shown, comprising an inner tube 9 and an outer tube 10. The inner tube 9 and outer tube 10 are arranged as concentric tubes. The inner tube 9 may comprise mica and carbon fibre. The inner tube 9 provides a dual function of housing the heater tube 5 and providing a conduit for the flow of air between an upstream end 2a of the inner tube 9 and a downstream end 2b of the inner tube 9. The outer tube 10 provides a housing for the electric roofing torch 1, the housing being configured to shield an operator from heat from the heater tube 5 during use.

The outer tube 10 may be longer than the inner tube 9. In this way, the fan unit 4 can be located within an upstream end 2a, 7 of the outer tube 10, in a region extending between the upstream end of the outer tube 10 and an upstream end of the inner tube 9. A downstream end of the fan unit 4 may support the upstream end of the inner tube 9 within the outer tube 10.

The tubular body 2 may comprise a plurality of spacers 11, preferably annular or ringshaped spacers 11, arranged between an outer surface of the inner tube 9 and an inner surface of the outer tube 10. There may be two spacers, for example, as shown in Fig. 3.

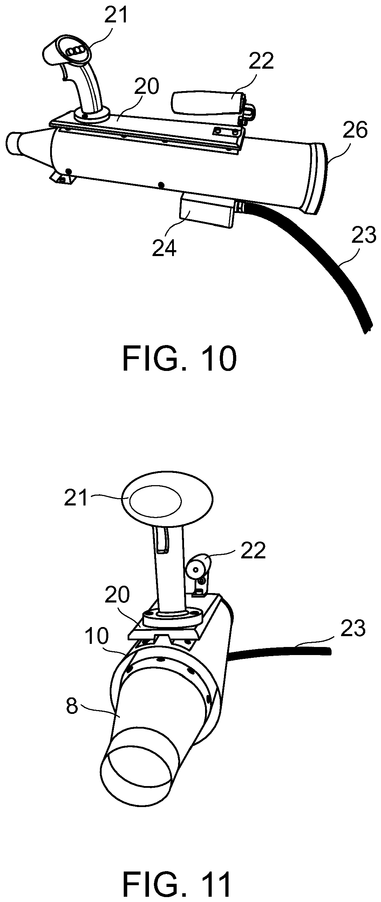

A mount 12, for example, in the form of a track, may be provided on an upper surface of the outer tube 10. A carriage 20 may be fitted to the mount 12 as shown in Fig. 10. The carriage may be provided with a set of controls 21, for example, in the form of a joystick or throttle through which the operator can carry and operate the torch with one hand. A handle 22 may be provided for the operator's other hand, such that the torch is carried in both hands. Other ways of carrying the electric roofing torch and/or controlling the operation of the torch are also possible, for example, a sling that the operator can rest on an operator's arm to transfer the weight of the torch.

Also visible in Fig. 10 is flexible power lead 23, and a junction box 24 for where the power comes into the electric roofing torch 1. A high power electrical supply may be connected to the electric roofing torch 1, for example a 240V AC and 32A supply. The junction box 24 may house electronics for operating the electrical components like the fan unit 4 and the heater tube 5. The electronics may raise the frequency of an electrical supply to the fan unit 4.

The fan unit 4 is shown in more detail in Fig. 6. It comprises a fan core 14 comprising an impeller 15 and a stator core 16, which are housed within a fan housing 17. The fan housing 17 has an upstream end 17a and a downstream end 17b. The impeller 15 is arranged at an upstream edge 16a of the stator core 16, with the impeller 15 being arranged to rotate about a central axis A-A of the fan unit 4. A motor 19 is housed within the stator core 16, the motor having a drive shaft 19a for providing rotational drive to the impeller 15.

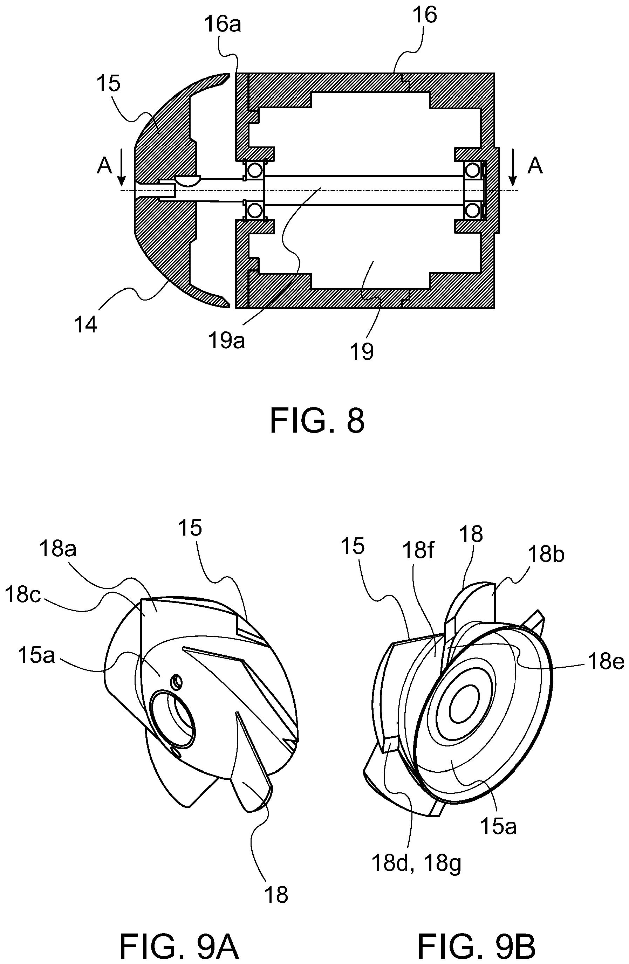

The impeller 15 may be provided with a plurality of aerodynamically profiled blades 18, for example, as shown in Figs. 9A and 9B. There may be between 3 and 8 blades 18, more preferably five blades 18 as shown, the blades 18 extending radially outward from a hub 15a of the impeller 15.

As the fan unit 4 is a vaneaxial fan, the impeller 15 is arranged upstream of a plurality of vanes 13. These vanes 13 extend radially, between a radially inner surface 25a and a radially outer surface 25b of a core flow path 25 defined within the fan unit 4.

The radially outer surface 25b of the core flow path 25 is provided by an internal surface of a fan housing 17. The radially inner surface 25a is provided by an outer surface of the fan core 14.

There may be between 5 and 15 vanes 13 extending between the radially inner surface 25a and the radially outer surface 25b of the core flow path 25. Preferably there are between 7 and 12 vanes and most preferably there are 9 vanes. The vanes may be spaced equally around the cylindrical surface of the stator core 16

The vanes 13 may be integrally formed with the fan core 16 and/or the fan housing 17. In the example of Fig. 7, the vanes 13 are provided integrally on the cylindrical outer surface of the stator core 16, these vanes 13 extending therefrom to slot into position within and against the inner surface 25b of the fan housing 17, in this way suspending the fan core 14 within the fan unit 4 in a concentric fashion.

The electrical motor 19 may be one that is designed, under normal operation, to rotate the impeller 15 at speeds in excess of 15,000 rpm, more preferably in excess of 20,000 rpm or even 22,000 rpm. In one example the motor 19 is arranged to rotate the impeller 15 at 24,000 rpm or higher. The rotational speed of the impeller 15 during use may be controllable by the operator, e.g., by using the controls 21.

The impeller 15 may comprise a domed hub 15a, from which the blades 18 extend. The impeller 15 may have an external contour that blends with that of the stator core 16.

The impeller 15 may be fabricated through being printed using a 3D printing tool. The 3D printing may form an internal lattice framework within the impeller 15 to minimise weight, in particular rotational weight.

Alternatively or additionally, the impeller 15 may be machined to final form, for example, from a cylindrical block of material or from a cast blank which is partially pre-formed to an impeller shape.

In one embodiment, the impeller 15 is made from aluminium extruded stock (for example, 6082-T6) which has been milled to final form. In another, the impeller 15 is 3D printed in either aluminium or titanium. Other materials and methods of fabrication are also envisaged.

The blades 18 each comprise a leading edge 18c and a trailing edge18d. The trailing edges 18d of the blades 18 may have been machined back to provide a cylindrical cut-away profile. The trailing edge 18d of each blade 18 may comprise a radially outer, rectangular cut-away portion and a radially inner, extended rib portion 18e that blends to the domed outer surface 18f of the hub 18a. The trailing edge 18d of such a cut-away portion may be provided by a flat, circumferentially extending trailing surface 18g that extends between the suction and pressure surfaces 18a, 18b of the blade 18.

The stator core 16 may comprise a range of materials. For example, it may comprise a polymer-based material, a carbon rich nylon or other composite material comprising a polymer-based matrix material, for example, a polyester or epoxy based material. The stator core 16 could also be machined from a lightweight metal such as an aluminium alloy.

The fan unit 4, the heater tube 5 and the tubular body 2 share a common axis. The fan unit 4 is housed within the tubular body 2, in particular an inner tube 9 of a dual-walled tubular body 2.

The fan housing 17 provides a fan inlet (upstream end 17a) which protrudes axially beyond the upstream end 2a of an outer tube 10 of the tubular body 2 and a fan outlet (downstream end 17b) that is arranged within the inner tube 9 of the tubular body 2, upstream of the heater tube 5.

The fan unit 4 may be provided with a grille 26 at the fan inlet 17a (see Fig. 10). The grille 26 may be configured to prevent clothing or fingers of the operator from entering the fan unit 4 of the electric roofing torch 1, while providing openings that allow a sufficient air flow into the torch 1.

The fan housing 17 may comprise a machined sleeve. The sleeve may have been machined from a material like aluminium (for example, hollow stock 6082-T6), or it could be made from a polymer-based material, e.g., nylon or a polymer-based matrix material which is reinforced with fibres. In one example this might be a carbon-rich nylon mix. In preference to machining, the fan housing 17 may be 3D printed. Whatever the materials, they are preferably chosen to help minimise the overall weight of the electric roofing torch 1.

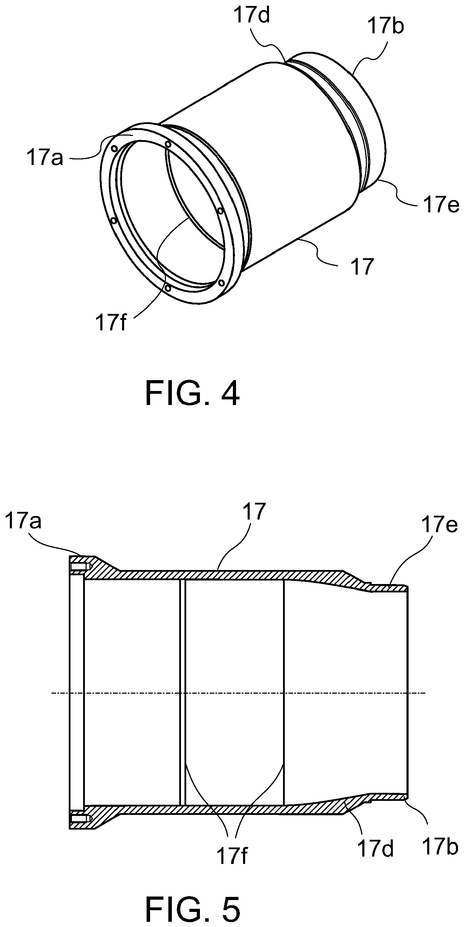

The inner surface 25b of the fan housing 17 may comprise an axially staged profile (see Figs. 4 and 5). In this way a radius of the inner surface 25b may reduce from the upstream end 17a to the downstream end 17b in a stepwise profile, the steps 17f corresponding in position to the edges of the vanes 13. For example, a step 17f may be provided in the inner surface 17b to locate the vanes 13 in position during assembly when the stator core 16 is introduced into the fan housing 17 from an upstream end 17a of the fan housing 17. The steps 17f may help to locate the stator core 16 within the fan housing 17 through the engagement of the vanes 13. This is not just during fabrication but also during use when large forces are generated in reaction to the force imparted to the air flow.

The outer surface 17c of the fan housing 17 may comprise a bridging section 17d at a downstream end 17b. The bridging section 17d may bridge across an annular space 27 between the outer tube 10 and the inner tube 9 of the tubular body 2. The bridging section 17d may have an outer diameter dimension that reduces in a downstream, axial direction to bridge from the outer tube 10 to the inner tube 9 of the tubular body 2 (see Fig. 3). The outer surface 17c may comprise an annular seat 17e of reduced diameter at the downstream end 17b for seating within an inner tube 9 of the tubular body 2.

The inner tube 9 of the tubular body 2 may be provided with a nozzle cone 8, for example, as a separate component that is fitted to the inner tube 9, at the downstream end of the inner tube 9 for concentrating the flow of air as it exits the heater tube 5. The nozzle cone 8 may comprise stainless steel or other suitable heat resistant material.

The inner tube 9 may comprise a polymer-based material. It may comprise, for example, a polymer-based matrix material which is reinforced with fibres, e.g., carbon fibres. The polymer-based matrix material may comprise a polyester or epoxy based material.

The outer tube 10 may comprise a polymer-based material. It may comprise, for example, a polymer-based matrix material which is reinforced with fibres, e.g., carbon fibres. The polymer-based matrix material may comprise a polyester or epoxy based material.

The materials of the inner tube 9 and outer tube 10 are chosen to withstand the operating temperatures of the electric roofing torch 1 while minimising overall weight as far as possible.

The heater tube 5 may comprise a plurality of electric heater elements 6a. These may be arranged in the form of a matrix 6 that the air is passed through to heat the air enroute to a nozzle 8 of the electric roofing torch 1.

The heater tube 5 may consume more than 18kW during use, preferably more than 20kW, and more preferably still around 22kW or more during use.

The heater tube 5 may comprise a housing provided by a mica cylindrical tube. This may be configured to fit within an inner tube 9 of the tubular body 2. The mica will help to insulate the inner tube 9 from the high operating temperatures. The heater elements 6a of the heater tube 5 may be supported on a mica chassis in a 'complex' formation and arranged to provide a corresponding resistance which when subjected to an electrical load, creates the heat output from the electric roofing torch 1.

The complex formation of the heater elements 6a and the matrix 6 ('super heater') may take the form of a set of resistance circuits arranged to provide as uniform as possible heat across the chassis which fills the inner tube 9. There may be three or more resistance circuits. More preferably there are six resistance circuits. In such a set-up, pairs of resistance circuits may be coupled to each phase of a three phase supply. The resistance circuits may be arranged in a hexagonal array within the heater matrix 6 to provide a uniform heat across the heater tube 5. The air is forced through the complex matrix super heater 6 and when the resistance wires are subjected to an electrical load, thermal energy is transferred from the resistance wires into the air. This process is further accelerated because the flow of air within the electric roofing torch 1 is restricted at an exit point via a nozzle 8, for example, a conical nozzle 8.

The fan unit 4, as a result of being a vaneaxial fan, may be able to generate volumes of air flow from a nozzle 8 of the electric roofing torch 1 that are in excess of 800 m³/h, more preferably in excess of 900 m³/h. This may be with speeds of air flow in excess of 80km/h or even more than 90km/h. In a preferred embodiment, air flow speeds of greater than 100km/h, for example, 105km/h or greater, are achievable from the electric roofing torch 1 at such volumes. The heater tube 5 may be capable of heating the flow of air to temperatures in excess of 500°C, more preferably in excess of 600°C. The electric roofing torch 1 may also have a total weight of less than 5kg, preferably less than 3kg, and a size of around half a metre, making it easy for an operator to manoeuvre.

The electric roofing torch 1 may further comprise a hanging bracket 28 provided on an underside of the electric roofing torch 1. The hanging bracket 28 may be configured to provide a foot for when the electric roofing torch 1 rests on the ground between roofing operations.

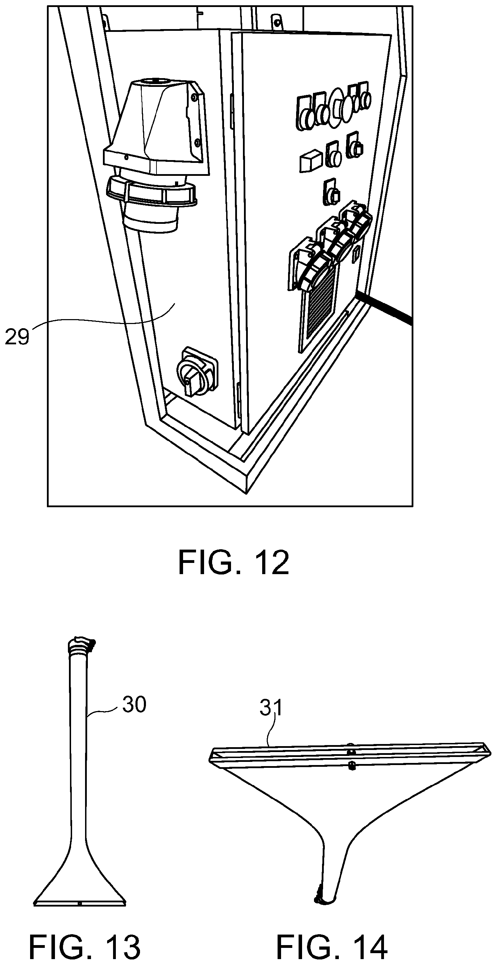

The electric roofing torch 1 may operate on a three-phase AC mains supply. Alternatively power can be generated using a mobile generator 29 such as that shown in Fig. 12. The electric roofing torch 1 may have a power rating of 22.5kW or more, drawing a current of about 32amps.

The electric roofing torch may also comprise a lance or delivery nozzle 30, e.g., as shown in Figs. 13 to 14. The lance or delivery nozzle may be mountable on a nozzle outlet 8 provided at the downstream end 2b of the inner tube 9 in order to direct hot air from the nozzle outlet 8 of the tubular body 2 for use in a roofing operation. The lance or delivery nozzle 30 may extend a distance from the operator's hips to a floor level. Thus, the torch lance or delivery nozzle 30 may configured to reach the floor level when the electric roofing torch is in use, and preferably when the electric roofing torch 1 is being carried by a standing operator.

The lance or delivery nozzle 30 may be made of a lightweight material such as aluminium, or more preferably a composite material such as a carbon reinforced matrix material, e.g., as shown in Figs. 13 and 14, that is able to withstand the high operating temperatures. The composite material may be shaped to define a blade-shaped aperture 31 to provide a wide flat jet of hot air for use in the roofing operation.

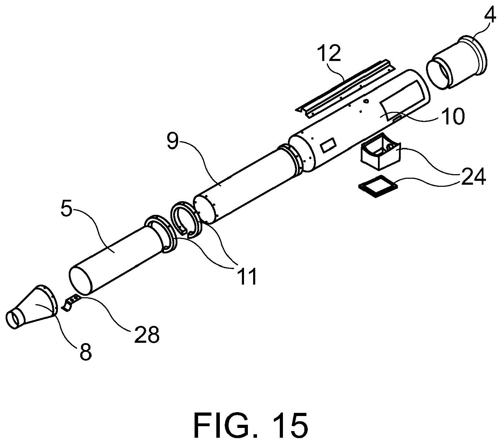

Fig. 15 shows an exploded, perspective view of the electric roofing torch shown in Fig. 3 to help aid understanding.

There follows a brief discussion of the preferred (non-limiting) dimensions for the main components of the electric roofing torch, such as the fan unit, the tubular body, etc..

Exemplary Dimensions for the main components:

### (i) Fan Unit

The impeller may comprise an outer diameter with the blades 18 included of more than 100mm, preferably more than 105mm. In one example, the outer diameter of the impeller is 109mm or more.

The hub 15a of the impeller 15 may have a maximum outer diameter of more than 80mm. In a preferred embodiment the hub 15a of the impeller 15 has a maximum outer diameter of more than 85 mm, more preferably 88 or 89mm.

The blades 18 of the impeller 15 each comprise a suction surface 18a and a pressure surface 18b. The suction surface 18a may be profiled with a radius (e.g., when viewed perpendicular to the fan axis) of between 80 and 100mm at a mid-chord position. The suction surface 18a may comprise a radius of between 25 and 40mm at a leading edge thereof. The pressure surface 18b may be profiled with a radius (e.g., when viewed perpendicular to the fan axis) of between 200 and 250mm at a mid-chord position. The pressure surface 18b may comprise a radius of between 30 and 45mm at a leading edge thereof.

Where the blades 18 of the impeller 15 may have been machined back to provide a cylindrical cut-away profile, the trailing edges 18d of the blades 18 may have been machined back by more than 5 mm, more preferably by more than 7 mm. In one example, they have been machined back to provide a cut-away of 10mm. The trailing edge 18d of each blade 18 may comprise a radially outer, rectangular cut-away portion and a radially inner, extended rib portion 18e that blends to the domed outer surface 18f of the hub 15a. The leading edge 18c of each blade 18 may be set back from a nose of the hub 15a. This may be by more than 5mm, more preferably by more than 8mm, and more preferably still by 11mm.

The radially inner surface of the fan housing may comprise a diameter of greater than 100mm at its upstream end. For example, it may comprise a diameter of greater than 105mm, preferably 110mm ± 2mm. The radially inner surface of the fan housing may comprise a diameter of less than 105mm at its downstream end. For example, it may comprise a diameter of less than 102mm, preferably 98mm ± 2mm.

The radially outer surface 17c of the fan core 17 may have a diameter of greater than 80mm. For example, it may have a diameter of greater than 85mm, and more preferably it is 89 or 90mm ± 2mm.

An annular cross-sectional area of the core flow path 25 (defined between the radially inner surface 25a and the radially outer surface 25b in the radial direction) may decrease from the upstream end 17a of the fan housing 17 to the downstream end 17b of the fan housing 17. A radial separation of the radially inner surface 25a and the radially outer surface 25b of the core flow path 25 may be greater than 5mm, for example, greater than 7mm. The radial separation of the radially inner surface 25a and the radially outer surface 25b of the core flow path 25 may be less than 15mm, for example, less than 12mm. Preferably the radial separation is 10mm ± 2mm.

### (ii) Tubular Body

The inner tube 9 may have an inner diameter greater than 100mm, for example an inner diameter of 104mm ± 2mm. The inner tube 9 may have an outer diameter of less than 110mm, for example, an outer diameter of 107mm ± 2mm.

The inner tube 9 may have a length of greater than 300mm. The length of the inner tube 9 may be less than 500mm. In a preferred embodiment the inner tube 9 has a length of 400mm ± 5cm.

The outer tube may have an inner diameter greater than 120mm, for example, 122mm ± 2mm. The outer tube may have an outer diameter of less than 130mm, for example, 125mm ± 2mm.

The outer tube 10 may have a length of greater than 400mm. The length of the outer tube 10 may be less than 600mm. In a preferred embodiment the outer tube 10 has a length of 525mm ± 5cm.

### (iii) Delivery Nozzle

The delivery nozzle 30 may comprise a blade aperture 31 at a distal end thereof to create a thin (for example, less than 1cm high) jet of hot air exiting from the delivery nozzle of the electric roofing torch during use, the thin jet of hot air spanning a width of greater than 150mm.

## Claims

1. An electric roofing torch (1) comprising:
a tubular body (2) having an upstream end (2a) and a downstream end (2b);
a fan unit (4) mounted in the tubular body to drive a flow of air through the tubular body; and
a heater tube (5) comprising a heater matrix (6), the heater tube being mounted in the tubular body to heat the flow of air as it passes through the tubular body,
wherein the fan unit is an electric vaneaxial fan which is mounted upstream of the heater tube, that comprises a fan housing (17) and a fan core (14), the fan core comprising a stator core (16) and an impeller (15), the impeller being arranged to rotate about a central axis of the electric roofing torch;
wherein the tubular body comprises a double-walled structure comprising an inner tube (9) and an outer tube (10), the inner tube housing the heater tube and providing a conduit for the flow of air between an upstream end of the inner tube and a downstream end of the inner tube; and
wherein the fan housing provides a fan outlet (17b) that is arranged within the inner tube upstream of the heater tube; and
**characterised in that** the fan housing provides a fan inlet (17a) which protrudes beyond an upstream end of the outer tube.

2. The electric roofing torch as claimed in claim 1, wherein the electric vaneaxial fan is a three-phase fan unit and the motor is arranged to operate at rotational speeds in excess of more than 15,000rpm, optionally more than 20,000rpm.

3. The electric roofing torch as claimed in claim 1 or claim 2, wherein the impeller (15) is provided with a plurality of blades (18), the impeller being arranged upstream of a plurality of vanes (13), the plurality of vanes extending between a radially inner surface (25b) of the fan housing (17) and a radially outer surface (25a) of the fan core (14), optionally wherein the stator core (16) houses a motor (19) for driving the impeller (15).

4. The electric roofing torch as claimed in claim 3, wherein the impeller blades (18) each comprise a leading edge (18c) and a trailing edge (18d), and wherein the trailing edges of the blades have been machined back to provide a cylindrical cut-away profile.

5. The roofing torch as claimed in claim 4, wherein the trailing edge (18d) of each blade (18) comprises a radially outer, rectangular cut-away portion and a radially inner, extended rib portion (18e) that blends to a domed outer surface (18f) of a hub (18a) of the impeller (15), optionally wherein the trailing edge (18d) of the cut-away portion is provided by a flat circumferentially extending trailing surface (18g) that extends between pressure and suction surfaces (18a, 18b) of the blade.

6. The electric roofing torch as claimed in any of claims 3 to 5, wherein there are between 5 and 15 vanes (13) extending between the radially inner surface (25b) of the fan housing (17) and the radially outer surface (25a) of the fan core (14).

7. The electric roofing torch as claimed in any preceding claim, wherein the outer tube (10) provides a housing for the electric roofing torch (1), the housing being configured to shield an operator from heat from the heater tube (5) during use; and/or
wherein the inner tube (9) is shorter than the outer tube (10) and the fan unit (4) is located within the upstream end (2a) of the outer tube extending between the upstream end of the outer tube and an upstream end of the inner tube.

8. The electric roofing torch as claimed in any preceding claim, the heater matrix (6) comprising heater elements (6a) extending longitudinally within the heater tube and arranged to extend into the flow of air which passes through the electric roofing torch (1) when in use.

9. The electric roofing torch as claimed in any preceding claim, wherein an outer surface (17c) of the fan housing (17) comprises a bridging section (17d) at a downstream end (17b), which bridges across an annular space (27) between the outer tube (10) and the inner tube (9) of the tubular body (2); the bridging section having an outer diameter dimension that reduces in a downstream, axial direction to bridge from the outer tube to the inner tube of the tubular body, optionally wherein the outer surface (17c) of the fan housing (17) comprises an annular seat (17e) of reduced diameter at the downstream end (17b) for seating within the inner tube (9) of the tubular body (2).

10. The electric roofing torch as claimed in any preceding claim, wherein a downstream end of the fan unit (4) supports the upstream end (2a) of the inner tube (9) within the outer tube (10).

11. The electric roofing torch as claimed in any preceding claim, wherein the heater tube (5) comprises a tubular support for a plurality of electric heater elements (6a), the tubular support being made of mica.

12. The electric roofing torch as claimed in claim 11, wherein the plurality of electric heater elements (6a) comprises six resistance circuits, optionally wherein the plurality of electric heater elements (6a) are arranged in a hexagonal configuration when viewed axially.

13. The electric roofing torch as claimed in any preceding claim, comprising a carriage (20) mounted on an outer surface of the tubular body (2), the carriage providing a sling for carrying the electric roofing torch on an arm of an operator, optionally wherein the carriage comprises a control (21) for the operator to control the temperature, volume and/or pressure of the flow to be delivered for a roofing operation.

14. The electric roofing torch as claimed in any preceding claim, wherein the electric roofing torch comprises:
a delivery nozzle (30) fitted to a nozzle outlet (8) provided on the downstream end (2b) of the tubular body (2) to direct hot air from the nozzle outlet of the tubular body for use in a roofing application; and/or
a hanging bracket (28) provided on an underside of the electric roofing torch (1), the hanging bracket being configured to provide a foot for when the electric roofing torch rests on the ground.

15. A method of providing a working flow of hot air from an electric roofing torch for use in a roofing operation, the method comprising:
generating a flow of air within a tubular body (2) of an electric roofing torch (1) using a fan unit (4) mounted in the tubular body; and
heating the flow of air using an electric heater matrix (6) of a heater tube (5) mounted in the tubular body of the electric roofing torch to heat the flow of air as it passes through the tubular body from an upstream end (2a) to a downstream end (2b) of the tubular body;
wherein the fan unit is an electric vaneaxial fan which is mounted upstream of the heater tube, that comprises a fan housing (17) and a fan core (14), the fan core comprising a stator core (16) and an impeller (15), the impeller being arranged to rotate about a central axis of the electric roofing torch;
wherein the tubular body comprises a double-walled structure comprising an inner tube (9) and an outer tube (10), the inner tube housing the heater tube and providing a conduit for the flow of air between an upstream end of the inner tube and a downstream end of the inner tube; and
wherein the fan housing provides a fan outlet (17b) that is arranged within the inner tube upstream of the heater tube; and
**characterised in that** the fan housing provides a fan inlet (17a) which protrudes beyond an upstream end of the outer tube.

## Patentansprüche

1. Elektrischer Dachbrenner, (1) umfassend:
einen rohrförmigen Körper (2), der ein stromaufwärtiges Ende (2a) und ein stromabwärtiges Ende (2b) aufweist;
eine Lüftereinheit (4), die in dem rohrförmigen Körper montiert ist, um einen Luftstrom durch den rohrförmigen Körper anzutreiben; und
ein Heizungsrohr (5), das eine Heizungsmatrix (6) umfasst, wobei das Heizungsrohr in dem rohrförmigen Körper montiert ist, um den Luftstrom zu erwärmen, während er durch den rohrförmigen Körper durchgeht,
wobei die Lüftereinheit ein elektrischer FlügelraEP4107442d-Axiallüfter ist, der stromaufwärts des Heizungsrohrs montiert ist, der ein Lüftergehäuse (17) und einen Lüfterkern (14) umfasst, wobei der Lüfterkern einen Statorkern (16) und ein Laufrad (15) umfasst, wobei das Laufrad eingerichtet ist, um sich um eine zentrale Achse des elektrischen Dachbrenners zu drehen;
wobei der rohrförmige Körper eine doppelwandige Struktur umfasst, die ein inneres Rohr (9) und ein äußeres Rohr (10) umfasst, wobei das innere Rohr das Heizungsrohr aufnimmt und eine Leitung für den Luftstrom zwischen einem stromaufwärtigen Ende des inneren Rohrs und einem stromabwärtigen Ende des inneren Rohrs bereitstellt; und
wobei das Lüftergehäuse einen Lüfterauslass (17b) bereitstellt, der innerhalb des inneren Rohrs, stromaufwärts des Heizungsrohrs, eingerichtet ist; und
**dadurch gekennzeichnet, dass** das Lüftergehäuse einen Lüftereinlass (17a) bereitstellt, der über ein stromaufwärtiges Ende des äußeren Rohrs hinausragt.

2. Elektrischer Dachbrenner nach Anspruch 1, wobei der elektrische Flügelrad-Axiallüfter eine Drehstrom-Lüftereinheit ist und der Motor eingerichtet ist, um mit Drehzahlen von mehr als 15.000 U/min, optional mehr als 20.000 U/min, zu arbeiten.

3. Elektrischer Dachbrenner nach Anspruch 1 oder Anspruch 2, wobei das Laufrad (15) mit einer Vielzahl von Schaufeln (18) versehen ist, wobei das Laufrad stromaufwärts einer Vielzahl von Flügelrädern (13) eingerichtet ist, wobei sich die Vielzahl von Flügelrädern zwischen einer radial inneren Oberfläche (25b) des Lüftergehäuses (17) und einer radial äußeren Oberfläche (25a) des Lüfterkerns (14) erstreckt, wobei der Statorkern (16) optional einen Motor (19) zum Antreiben des Laufrades (15) aufnimmt.

4. Elektrischer Dachbrenner nach Anspruch 3, wobei die Laufradschaufeln (18) jeweils eine Vorderkante (18c) und eine Hinterkante (18d) umfassen, und wobei die Hinterkanten der Schaufeln zurückbearbeitet wurden, um ein zylindrisches, ausgeschnittenes Profil bereitzustellen.

5. Dachbrenner nach Anspruch 4, wobei die Hinterkante (18d) jeder Schaufel (18) einen radial äußeren, rechteckigen ausgeschnittenen Abschnitt und einen radial inneren, verlängerten Rippenabschnitt (18e) umfasst, der in eine gewölbte äußere Oberfläche (18f) einer Nabe (18a) des Laufrads (15) übergeht, wobei die Hinterkante (18d) des ausgeschnittenen Abschnitts optional durch eine flache, sich in Umfangsrichtung erstreckende hintere Oberfläche (18g) bereitgestellt ist, die sich zwischen der Druck- und der Saugoberfläche (18a, 18b) der Schaufel erstreckt.

6. Elektrischer Dachbrenner nach einem der Ansprüche 3 bis 5, wobei sich zwischen 5 und 15 Schaufeln (13) zwischen der radialen inneren Oberfläche (25b) des Lüftergehäuses (17) und der Radial äußeren Oberfläche (25a) des Lüfterkerns (14) erstrecken.

7. Elektrischer Dachbrenner nach einem vorstehenden Anspruch, wobei das äußere Rohr (10) ein Gehäuse für den elektrischen Dachbrenner (1) bereitstellt, wobei das Gehäuse konfiguriert ist, um einen Bediener vor Wärme aus dem Heizungsrohr (5) während der Verwendung abzuschirmen; und/oder
wobei das innere Rohr (9) kürzer als das äußere Rohr (10) ist und sich die Lüftereinheit (4) innerhalb des stromaufwärtigen Endes (2a) des äußeren Rohres befindet und sich zwischen dem stromaufwärtigen Ende des äußeren Rohres und einem stromaufwärtigen Ende des inneren Rohres erstreckt.

8. Elektrischer Dachbrenner nach einem vorstehenden Anspruch, wobei die Heizungsmatrix (6) Heizungselemente (6a) umfasst, die sich in Längsrichtung innerhalb des Heizungsrohrs erstrecken und eingerichtet sind, um sich in den Luftstrom zu erstrecken, der bei Verwendung durch den elektrischen Dachbrenner (1) durchgeht.

9. Elektrischer Dachbrenner nach einem vorstehenden Anspruch, wobei eine äußere Oberfläche (17c) des Lüftergehäuses (17) einen Überbrückungsabschnitt (17d) an einem stromabwärtigen Ende (17b) umfasst, der einen Ringraum (27) zwischen dem äußeren Rohr (10) und dem inneren Rohr (9) des rohrförmigen Körpers (2) überbrückt; wobei der Überbrückungsabschnitt eine Außendurchmesserabmessung aufweist, die sich in einer stromabwärtigen, axialen Richtung verringert, um von dem äußeren Rohr zu dem inneren Rohr des rohrförmigen Körpers zu überbrücken, wobei optional die äußere Oberfläche (17c) des Lüftergehäuses (17) einen ringförmigen Sitz (17e) mit verringertem Durchmesser an dem stromabwärtigen Ende (17b) zum Sitzen in dem inneren Rohr (9) des rohrförmigen Körpers (2) umfasst.

10. Elektrischer Dachbrenner nach einem vorstehenden Anspruch, wobei ein stromabwärtiges Ende der Lüftereinheit (4) das stromaufwärtige Ende (2a) des inneren Rohrs (9) innerhalb des äußeren Rohrs (10) trägt.

11. Elektrischer Dachbrenner nach einem vorstehenden Anspruch, wobei das Heizungsrohr (5) einen rohrförmigen Träger für eine Vielzahl von elektrischen Heizungselementen (6a) umfasst, wobei der rohrförmige Träger aus Glimmer hergestellt ist.

12. Elektrischer Dachbrenner nach Anspruch 11, wobei die Vielzahl elektrischer Heizungselemente (6a) sechs Widerstandsschaltungen umfasst, wobei die Vielzahl elektrischer Heizungselemente (6a) optional in axialer Ansicht in einer sechseckigen Konfiguration eingerichtet sind.

13. Elektrischer Dachbrenner nach einem vorstehenden Anspruch, der einen Schlitten (20) umfasst, der an einer äußeren Oberfläche des rohrförmigen Körpers (2) montiert ist, wobei der Schlitten eine Schlinge zum Tragen des elektrischen Dachbrenners an einem Arm eines Bedieners bereitstellt, wobei der Schlitten optional eine Steuerung (21) für den Bediener umfasst, um die Temperatur, das Volumen und/oder den Druck des für einen Dacheindeckungsvorgang zu liefernden Stroms zu steuern.

14. Elektrischer Dachbrenner nach einem vorstehenden Anspruch, wobei der elektrische Dachbrenner umfasst:
eine Abgabedüse (30), die in einen Düsenauslass (8) eingepasst ist, der an dem stromabwärtigen Ende (2b) des rohrförmigen Körpers (2) bereitgestellt ist, um Heißluft aus dem Düsenauslass des rohrförmigen Körpers zur Verwendung in einer Dacheindeckungsanwendung zu leiten; und/oder
eine Hängehalterung (28), die an einer Unterseite des elektrischen Dachbrenners (1) bereitgestellt ist, wobei die Hängehalterung konfiguriert ist, um einen Fuß bereitzustellen, wenn der elektrische Dachbrenner auf dem Boden ruht.

15. Verfahren zum Bereitstellen eines Arbeitsstroms von Heißluft aus einem elektrischen Dachbrenner zur Verwendung bei einem Dacheindeckungsvorgang, wobei das Verfahren umfasst:
Erzeugen eines Luftstroms innerhalb eines rohrförmigen Körpers (2) eines elektrischen Dachbrenners (1) unter Verwendung einer in dem rohrförmigen Körper montierten Lüftereinheit (4); und
Erwärmen des Luftstroms unter Verwendung einer elektrischen Heizungsmatrix (6) eines Heizungsrohrs montiert ist, um den Luftstrom zu erwärmen, während er durch den rohrförmigen Körper von einem stromaufwärtigen Ende (2a) zu einem stromabwärtigen Ende (2b) des rohrförmigen Körpers durchgeht;
wobei die Lüftereinheit ein elektrischer Flügelrad-Axiallüfter ist, der stromaufwärts des Heizungsrohrs montiert ist, der ein Lüftergehäuse (17) und einen Lüfterkern (14) umfasst, wobei der Lüfterkern einen Statorkern (16) und ein Laufrad (15) umfasst, wobei das Laufrad eingerichtet ist, um sich um eine zentrale Achse des elektrischen Dachbrenners zu drehen;
wobei der rohrförmige Körper eine doppelwandige Struktur umfasst, die ein inneres Rohr (9) und ein äußeres Rohr (10) umfasst, wobei das innere Rohr das Heizungsrohr aufnimmt und eine Leitung für den Luftstrom zwischen einem stromaufwärtigen Ende des inneren Rohrs und einem stromabwärtigen Ende des inneren Rohrs bereitstellt; und
wobei das Lüftergehäuse einen Lüfterauslass (17b) bereitstellt, der innerhalb des inneren Rohrs stromaufwärts des Heizungsrohrs, eingerichtet ist; und
**dadurch gekennzeichnet, dass** das Lüftergehäuse einen Lüftereinlass (17a) bereitstellt, der über ein stromaufwärtiges Ende des äußeren Rohrs hinausragt.

## Revendications

1. Torche de toiture électrique (1) comprenant :
un corps tubulaire (2) présentant une extrémité amont (2a) et une extrémité aval (2b) ;
une unité de ventilateur (4) montée dans le corps tubulaire pour entraîner un écoulement d'air à travers le corps tubulaire ; et
un tube de chauffage (5) comprenant une matrice de chauffage (6), le tube de chauffage étant monté dans le corps tubulaire pour chauffer l'écoulement d'air lorsqu'il traverse le corps tubulaire,
dans laquelle l'unité de ventilateur est un ventilateur axial électrique qui est monté en amont du tube de chauffage, qui comprend un boîtier de ventilateur (17) et un noyau de ventilateur (14), le noyau de ventilateur comprenant un noyau de stator (16) et une roue (15), la roue étant agencée pour tourner autour d'un axe central de la torche de toiture électrique ;
dans laquelle le corps tubulaire comprend une structure à double paroi comprenant un tube intérieur (9) et un tube extérieur (10), le tube intérieur logeant le tube de chauffage et fournissant un conduit pour l'écoulement d'air entre une extrémité amont du tube intérieur et une extrémité aval du tube intérieur ; et
dans laquelle le boîtier de ventilateur fournit une sortie de ventilateur (17b) qui est agencée à l'intérieur du tube intérieur en amont du tube de chauffage ; et
**caractérisée en ce que** le boîtier de ventilateur fournit une entrée de ventilateur (17a) qui fait saillie au-delà d'une extrémité amont du tube extérieur.

2. Torche de toiture électrique selon la revendication 1, dans laquelle le ventilateur axial électrique est une unité de ventilateur triphasée et le moteur est agencé pour fonctionner à des vitesses de rotation supérieures à 15 000 tr/min, facultativement supérieures à 20 000 tr/min.

3. Torche de toiture électrique selon la revendication 1 ou la revendication 2, dans laquelle la roue (15) est pourvue d'une pluralité de pales (18), la roue étant agencée en amont d'une pluralité d'aubes (13), la pluralité d'aubes s'étendant entre une surface radialement intérieure (25b) du boîtier de ventilateur (17) et une surface radialement extérieure (25a) du noyau de ventilateur (14), facultativement dans laquelle le noyau de stator (16) loge un moteur (19) pour entraîner la roue (15).

4. Torche de toiture électrique selon la revendication 3, dans laquelle les pales de roue (18) comprennent chacune un bord d'attaque (18c) et un bord de fuite (18d), et dans laquelle les bords de fuite des pales ont été usinés pour fournir un profil cylindrique découpé.

5. Torche de toiture électrique selon la revendication 4, dans laquelle le bord de fuite (18d) de chaque pale (18) comprend une partie découpée rectangulaire radialement extérieure et une partie de nervure étendue radialement intérieure (18e) qui se fond avec une surface extérieure bombée (18f) d'un moyeu (18a) de la roue (15), facultativement dans laquelle le bord de fuite (18d) de la partie découpée est fourni par une surface de fuite plate s'étendant circonférentiellement (18g) qui s'étend entre les surfaces de pression et d'aspiration (18a, 18b) de la pale.

6. Torche de toiture électrique selon l'une quelconque des revendications 3 à 5, dans laquelle il y a entre 5 et 15 aubes (13) s'étendant entre la surface radialement intérieure (25b) du boîtier de ventilateur (17) et la surface radialement extérieure (25a) du noyau de ventilateur (14).

7. Torche de toiture électrique selon une quelconque revendication précédente, dans laquelle le tube extérieur (10) fournit un boîtier pour la torche de toiture électrique (1), le boîtier étant configuré pour protéger un opérateur de la chaleur provenant du tube de chauffage (5) en utilisation ; et/ou
dans laquelle le tube intérieur (9) est plus court que le tube extérieur (10) et l'unité de ventilateur (4) est située à l'intérieur de l'extrémité amont (2a) du tube extérieur s'étendant entre l'extrémité amont du tube extérieur et une extrémité amont du tube intérieur.

8. Torche de toiture électrique selon une quelconque revendication précédente, la matrice de chauffage (6) comprenant des éléments de chauffage (6a) s'étendant longitudinalement à l'intérieur du tube de chauffage et agencés pour s'étendre dans l'écoulement d'air qui traverse la torche de toiture électrique (1) lors de son utilisation.

9. Torche de toiture électrique selon une quelconque revendication précédente, dans laquelle une surface extérieure (17c) du boîtier de ventilateur (17) comprend une section de pontage (17d) à une extrémité aval (17b), qui forme un pont à travers un espace annulaire (27) entre le tube extérieur (10) et le tube intérieur (9) du corps tubulaire (2) ; la section de pontage présentant une dimension de diamètre extérieur qui diminue dans une direction axiale aval pour former un pont entre le tube extérieur et le tube intérieur du corps tubulaire, facultativement dans laquelle la surface extérieure (17c) du boîtier de ventilateur (17) comprend un siège annulaire (17e) de diamètre réduit à l'extrémité aval (17b) pour s'asseoir à l'intérieur du tube intérieur (9) du corps tubulaire (2).

10. Torche de toiture électrique selon une quelconque revendication précédente, dans laquelle une extrémité aval de l'unité de ventilateur (4) supporte l'extrémité amont (2a) du tube intérieur (9) à l'intérieur du tube extérieur (10).

11. Torche de toiture électrique selon une quelconque revendication précédente, dans laquelle le tube de chauffage (5) comprend un support tubulaire pour une pluralité d'éléments de chauffage électriques (6a), le support tubulaire étant réalisé en mica.

12. Torche de toiture électrique selon la revendication 11, dans laquelle la pluralité d'éléments de chauffage électriques (6a) comprend six circuits de résistance, facultativement dans laquelle la pluralité d'éléments de chauffage électriques (6a) sont agencés dans une configuration hexagonale lorsqu'ils sont vus axialement.

13. Torche de toiture électrique selon une quelconque revendication précédente, comprenant un chariot (20) monté sur une surface extérieure du corps tubulaire (2), le chariot fournissant une élingue pour transporter la torche de toiture électrique sur un bras d'un opérateur, facultativement dans laquelle le chariot comprend une commande (21) pour que l'opérateur commande la température, le volume et/ou la pression de l'écoulement à délivrer pour une opération de couverture de toiture.

14. Torche de toiture électrique selon une quelconque revendication précédente, dans laquelle la torche de toiture électrique comprend :
une buse de distribution (30) montée sur une sortie de buse (8) prévue sur l'extrémité aval (2b) du corps tubulaire (2) pour diriger de l'air chaud depuis la sortie de buse du corps tubulaire pour une utilisation dans une application de couverture de toiture ; et/ou
un support de suspension (28) prévu sur une face inférieure de la torche de toiture électrique (1), le support de suspension étant configuré pour fournir un pied lorsque la torche de toiture électrique repose sur le sol.

15. Procédé permettant de fournir un écoulement de travail d'air chaud à partir d'une torche de toiture électrique destiné à être utilisé dans une opération de couverture de toiture, le procédé comprenant les étapes consistant à :
générer un écoulement d'air à l'intérieur d'un corps tubulaire (2) d'une torche de toiture électrique (1) à l'aide d'une unité de ventilation (4) montée dans le corps tubulaire ; et
chauffer l'écoulement d'air à l'aide d'une matrice de chauffage électrique (6) d'un tube de chauffage (5) monté dans le corps tubulaire de la torche de toiture électrique pour chauffer l'écoulement d'air lorsqu'il traverse le corps tubulaire d'une extrémité amont (2a) à une extrémité aval (2b) du corps tubulaire ;
dans laquelle l'unité de ventilateur est un ventilateur axial électrique qui est monté en amont du tube de chauffage, qui comprend un boîtier de ventilateur (17) et un noyau de ventilateur (14), le noyau de ventilateur comprenant un noyau de stator (16) et une roue (15), la roue étant agencée pour tourner autour d'un axe central de la torche de toiture électrique ;
dans laquelle le corps tubulaire comprend une structure à double paroi comprenant un tube intérieur (9) et un tube extérieur (10), le tube intérieur logeant le tube de chauffage et fournissant un conduit pour l'écoulement d'air entre une extrémité amont du tube intérieur et une extrémité aval du tube intérieur ; et
dans laquelle le boîtier de ventilateur fournit une sortie de ventilateur (17b) qui est agencée à l'intérieur du tube intérieur en amont du tube de chauffage ; et
**caractérisée en ce que** le boîtier de ventilateur fournit une entrée de ventilateur (17a) qui fait saillie au-delà d'une extrémité amont du tube extérieur.
